# EUROPÄISCHE PATENTSCHRIFT

(11) **EP 1 290 775 B1**
(45) Veröffentlichungstag und Bekanntmachung des Hinweises auf die Patenterteilung: **17.08.2005**
(21) Anmeldenummer: 01936446.2
(22) Anmeldetag: 08.06.2001
(51) Int. Cl.: H02K 49/04

(54) **FERNBEDIENBARE HYSTERESEBREMSE**
REMOTE-CONTROLLABLE HYSTERESIS BRAKE
FREIN A HYSTERESIS A TELECOMMANDE

(30) Priorität: 16.06.2000 DE 10029885
(43) Veröffentlichungstag der Anmeldung: 12.03.2003
(73) Patentinhaber: ZF FRIEDRICHSHAFEN Aktiengesellschaft, 88038 Friedrichshafen (DE)
(72) Erfinder: SCHMIED, Eckhard, 88049 Oberteuringen (DE); UNSELD, Stefan, 88138 Weissensberg (DE)
(86) Internationale Anmeldenummer: PCT/EP2001/006531
(87) Internationale Veröffentlichungsnummer: WO 2001/097366

(56) Entgegenhaltungen:
- GB-A- 705 636
- US-A- 2 705 763
- US-A- 5 628 472
- US-A- 5 986 370

## Beschreibung

Die vorliegende Erfindung betrifft eine elektrisch steuerbare Hysteresebremse gemäß dem Oberbegriff des Anspruchs 1.

Hysteresebremsen liefern ein Bremsmoment, welches unabhängig von der Drehzahl ist. Im Gegensatz zu Wirbelstrombremsen besitzten Hysteresebremsen auch im Stillstand ein Bremsmoment.

Die Arbeitsweise von Hysteresebremsen beruht auf magnetischer Kraftwirkung sich anziehender Pole im Synchronlauf und auf ständiger Ummagnetisierung eines dauermagnetischen Materials im Schlupfbetrieb.

Hysteresebremsen werden in Zugkraft- und Bremsmomentregelsystemen eingesetzt; sie können als magnetischen Erregerteil eine elektromagnetische Spule oder einen Dauermagneten aufweisen.

Elektrisch steuerbare Hysteresebremsen werden u.a. zur feinfühligen Steuerung von Aufwickelprozessen oder auch für Antriebe mit exakt einstellbarer, berührungsloser Drehmomentübertragung eingesetzt.

Die Stromversorgung der elektromagnetischen Varianten erfolgt üblicherweise direkt über eine Anschlußleitung oder für die Fälle, dass die Komponenten selbst rotieren, über Schleifringe (z.B. Korbverseilmaschinen).

Es gibt jedoch Anwendungsfälle die es nicht erlauben, eine elektrische Spannungsversorgung in Form einer Anschlußleitung anzubringen.

Dies ist beispielsweise bei Zwirnmaschinen der Fall, bei denen ein Außenfaden 360° um einen Innenfaden rotiert, wodurch eine Zuleitung unmöglich wird. Aus diesem Grund werden hier Dauermagnet-Hysteresebremsen eingesetzt, die eine Anschlußleitung auf Grund des dauermagnetischen Erregermaterials nicht benötigen.

Diese Lösung weist den Nachteil auf, dass während des laufenden Prozesses nicht korrigierend eingegriffen und das Drehmoment eingestellt werden kann.

Das Problem tritt auch bei rotierenden Waschköpfen auf, die beispielsweise in industriellen Waschanlagen für LKW oder öffentliche Transportmittel (Straßenbahn etc.) eingesetzt werden.

Diese Waschköpfe werden mittels Rückstoß des Reinigungswassers, das aus den Düsen schießt, in Rotation versetzt. Da die Rotationsdrehzahl ungebremst bis zur Wirkungslosigkeit des Wasserstrahls ansteigen würde, muß die Drehung gebremst werden. Auch hier ist eine elektrische Zuleitung in der Regel nicht möglich. Der Einsatz einer dauermagnetisch erregten Bremse ist hier problematisch, da das Waschwasser in einem Temperaturbereich von ca. 5° C bis 95 °C verwendet werden kann und sich die Temperatur während der Anwendung verändert. Demzufolge erfährt das erzeugte Drehmoment über den Temperaturgang des Magnetmaterials des Erregermagneten eine Veränderung, die wiederum die Umdrehungszahl des Waschkopfs sehr stark ansteigen und fallen läßt. Dieser Effekt macht das System unkontrollierbar, und beeinflußt das Waschergebnis entsprechend.

Die US-A-5 986 370 zeigt eine Bremseinheit mit einer elektromagnetisch steuerbaren Bremse die mit einer internen Stromquelle zur Stromversorgung und mit Mitteln zum Regeln der Stromversorgung versehen ist.

Das Dokument US-A-2 705 763 beschreibt eine über eine Sendeeinheit gesteuerte Bremse, wobei die Empfangseinheit nicht in der Bremse integriert ist. Diese vorbekannte Vorrichtung hat darüber hinaus keine interne Stromversorgung.

Der vorliegenden Erfindung liegt die Aufgabe zugrunde, ein von einer elektrischen Anschlussleitung unabhängiges, elektromagnetisches und damit weitgehend temperaturunabhängiges Bremssystem anzugeben, dessen Moment auch während eines laufenden Prozesses eingestellt und variiert werden kann.

Diese Aufgabe wird gemäß der Erfindung durch die Merkmale des Patentanspruchs 1 gelöst; vorteilhafte Ausgestaltungen sind in den Unteransprüchen beschrieben.

Demnach wird vorgeschlagen, dass die Bremseinheit eine Hysteresebremse ist und eine Empfangseinheit umfasst, die mit den Mitteln zum Regeln der Stromversorgung verbunden ist, wobei mittels der Empfangseinheit über eine Sende-/Kontrolleinheit die Einstellung und Anpassung des Drehmomentes drahtlos erfolgt derart, dass sie unabhängig von einer Anschlußleitung betrieben werden kann.

Als Stromquelle eignet sich eine Batterie oder ein aufladbarer Akku. Damit wird eine autarke Einheit gebildet, die unabhängig von einer Anschlußleitung betrieben werden kann.

Die Einstellung und Anpassung des Drehmomentes kann mittels drahtloser Fernbedienung von einer entfernten Sendeeinheit erfolgen.

Dabei kann sowohl eine offene Steuerkette mit der Übermittlung eines Sollwert-Signals aufgebaut werden, als auch ein geschlossener Regelkreis beliebiger Charakteristik mit Soll-Istwert-Vergleich realisiert werden. Bevorzugterweise ist der Regelkreis in eine Recheneinheit des Empfangteils integriert. Dies hat den Vorteil, dass Übertragungsfehler minimiert werden.

Im Rahmen einer Variante der vorliegenden Erfindung ist der Regelkreis in die Sendeeeinheit integriert.

Bei gebremsten Abläufen kann gemäß der Erfindung ein parallel geschalteter elektrischer Generator über einen Laderegler den Akku während des Betriebs laden.

Dies ist insbesondere bei Anwendungen interessant, wo ein Akku mit großer Kapazität aus Platz- und Kostengründen nicht verwendet werden kann, wodurch die Betriebsdauer eingeschränkt wäre. Das von diesem Generator erzeugte Reaktionsmoment wäre als Teil des erforderlichen Betriebsmomentes nutzbar.

Die Erfindung hat den Vorteil, dass die Hysteresebremse auch dann betrieben werden kann, wenn eine Zuleitung aufgrund der Umstände nicht realisierbar ist.

Zudem wird durch die elektromagnetische Erregung die Unabhängigkeit des Drehmoments von der Temperatur gewährleistet: Im Gegensatz zu einem Dauermagnetsystem hängt das erzeugte Drehmoment nur vom Spulenstrom ab, so dass dieser die Stellgröße eines Regelkreises bilden kann. Das Drehmoment kann exakt, ohne den Prozeß anzuhalten, eingestellt oder an veränderliche Prozeßparameter angepaßt werden.

Im folgenden wird die Erfindung anhand der Zeichnung näher erläutert.

Es zeigen:
- Figur 1: eine schematische Darstellung der Hysteresebremse gemäß der Erfindung;
- Figur 2: eine schematische Darstellung der Anwendung der erfindungegemäßen Hysteresebremse bei einem rotierendem Waschkopf; und
- Figur 3: eine schematische Darstellung der Anwendung der erfindungegemäßen Hysteresebremse bei einer Zwirnmaschine.

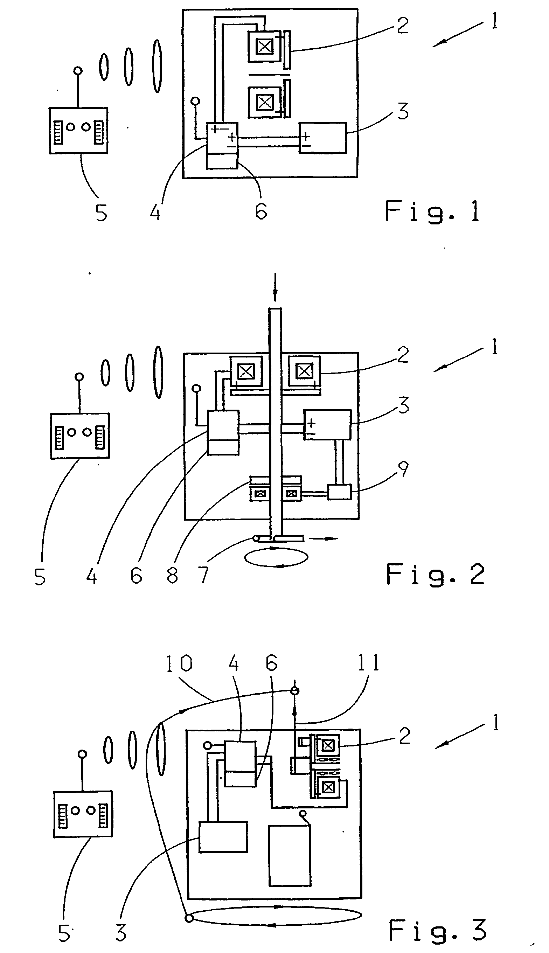

Gemäß Figur 1 ist die erfindungsgemäße Hysteresebremse als autarke Einheit 1 ausgebildet. Diese umfasst die Hysteresebremse 2, die mittels eines Akkus bzw. einer Batterie 3 mit Strom versorgt wird. Zur Einstellung und Anpassung des Drehmomentes ist eine Regeleinheit 4 vorgesehen. Bevorzugterweise bildet der Spulenstrom die Stellgröße eines Regelkreises, wobei die entsprechende Recheneinheit in die Regeleinheit integriert ist.

Die Einstellung und Anpassung des Drehmomentes erfolgt mittels Fernbedienung von einer entfernten Sende/Kontrolleinheit 5, die mit einer Empfangseinheit 6 kommuniziert.

Somit ist der Betrieb der Hysteresebremse auch dann gewähreistet, wenn eine Zuleitung aufgrund der Umstände nicht realsierbar ist, wobei das Drehmoment während des Betriebs exakt eingestellt werden kann.

Figur 2 zeigt eine Anwendung einer Variante der erfindungegemäßen Hysteresebremse im Rahmen eines rotierenden Waschkopfs 7, der mittels Rückstoß des Reinigungswassers, das aus den Düsen schießt, in Rotation versetzt wird. Neben dem Akku 3, der Empfangseinheit 6, der Regeleinheit 4 und der Sende-/Kontrolleinheit 5, weist die Hysteresebremse 1 einen Laderegler 9 auf.

Gemäß der Erfindung wird der Akku mittels eines parallel geschalteten elektrischen Generators 8 über einen Laderegler 9 während des Betriebs geladen. Dadurch kann der Waschkopf besonders platz- und kostengünstig betrieben werden.

Figur 3 zeigt eine weitere Anwendung der erfindungegemäßen Hysteresebremse im Rahmen einer Zwirnmaschine.

Bei Zwirnmaschinen rotiert ein Außenfaden 9 um 360° um einen Innenfaden 10, derart, dass eine Zuleitung für die Stromversorgung einer elektromagnetischen Hysteresebremse unmöglich wird. Mittels der vorliegenden Erfindung kann eine elektromagnetische Hysteresebremse eingesetzt werden, wie in Figur 3 gezeigt, da gemäß der Erfindung die Stromversorgung ohne Zuleitung erfolgt.

### Bezugszeichen

- 1: Hysteresebremseeinheit
- 2: Hysteresebremse
- 3: Akku/Batterie
- 4: Regeleinheit
- 5: Sende/Kontrolleinheit
- 6: Empfangseinheit
- 7: Waschkopf
- 8: Generator
- 9: Laderegler
- 10: Außenfaden
- 11: Innenfaden

## Patentansprüche

1. Bremseinheit mit einer elektromagnetisch steuerbaren Bremse (2) die mit einer internen Stromquelle (3) zur Stromversorgung und mit Mitteln (4) zum Regeln der Stromversorgung versehen ist, **dadurch gekennzeichnet, dass** die Bremseinheit eine Hysteresebremse ist und eine Empfangseinheit umfasst, die mit den Mitteln zum Regeln der Stromversorgung verbunden ist, wobei mittels der Empfangseinheit (6) über eine Sende-/Kontrolleinheit (5) die Einstellung und Anpassung des Drehmomentes drahtlos erfolgt derart, dass sie unabhängig von einer Anschlußleitung betrieben werden kann.

2. Bremseinheit nach Anspruch 1 **dadurch gekennzeichnet, dass** die Stromquelle (3) eine Batterie ist.

3. Bremseinheit nach Anspruch 1 **dadurch gekennzeichnet, dass** die Stromquelle (3) ein aufladbarer Akku ist.

4. Bremseinheit nach Anspruch 3, **dadurch gekennzeichnet, dass** ein Generator (8) und ein damit verbundener Laderegler (9) zum Laden des Akkus (3) während des Betriebs vorgesehen sind.

5. Bremseinheit nach einem der vorangehenden Ansprüche, **dadurch gekennzeichnet, dass** die Regelung der Stromversorgung über einen offenen oder einen geschlossenen Regelkreis erfolgt.

6. Bremseinheit nach Anspruch 5, **dadurch gekennzeichnet, dass** die Regelelektronik in die Mittel (4) zum Regeln der Stromversorgung integriert ist.

7. Rotierender Waschkopf, insbesondere für industrielle Waschanlagen, mit einer Bremseinheit nach einem der Ansprüche 1 bis 6.

8. Zwirnmaschine mit einer Bremseinheit nach einem der Ansprüche 1 bis 6.

## Claims

1. Brake unit with an electromagnetically controllable brake (2) which is provided with an internal power source (3) for power supply and with means (4) for controlling the power supply, **characterised in that** the brake unit is a hysteresis brake and comprise a receiving unit which is connected to means for controlling the power supply, wherein the torque is adjusted and adapted wirelessly by means of the receiving unit(6) via a transmitting/monitoring unit (5) such that it can be operated independently of a connecting line.

2. Brake unit according to Claim 1, **characterised in that** the power source (3) is a battery.

3. Brake unit according to Claim 1, **characterised in that** the power source (3) is a rechargeable accumulator.

4. Brake unit according to Claim 3, **characterised in that** a generator (8) and a charge controller (9) connected to the latter are provided to charge the accumulator (3) during operation.

5. Brake unit according to any one of the preceding Claims, **characterised in that** the power supply is controlled via an open or a closed control system.

6. Brake unit according to Claim 5, **characterised in that** the control electronics are integrated into the means (4) for controlling the power supply.

7. Rotating washing head, in particular for industrial washing plant, with a brake unit according to any one of Claims 1 to 6.

8. Twisting machine with a brake unit according to any one of Claims 1 to 6.

## Revendications

1. Unité de freinage avec un frein (2) commandé électriquement, pourvue d'une source de courant interne (3) pour l'alimentation en courant et de moyens (4) pour réguler l'alimentation en courant, **caractérisée en ce que** l'unité de freinage est un frein à hystérésis et comprend une unité de réception reliée aux moyens de régulation de l'alimentation en courant, le réglage et l'adaptation du couple étant réalisés à l'aide de l'unité de réception (6) par l'intermédiaire d'une unité d'émission-réception (5), de telle sorte qu'elle puisse être utilisée indépendamment d'une ligne de raccordement.

2. Unité de freinage selon la revendication 1, **caractérisée en ce que** la source de courant (3) est une batterie.

3. Unité de freinage selon la revendication 1, **caractérisée en ce que** la source de courant (3) est un accumulateur rechargeable.

4. Unité de freinage selon la revendication 3, **caractérisée en ce qu'**un générateur (8) et un régulateur de charge (9) relié à celui-ci sont prévus pour le chargement de l'accumulateur (3) pendant le fonctionnement.

5. Unité de freinage selon l'une des revendications précédentes, **caractérisée en ce que** la régulation de l'alimentation en courant est réalisée par l'intermédiaire d'un circuit de régulation ouvert ou fermé.

6. Unité de freinage selon la revendication 5, **caractérisée en ce que** l'électronique de régulation est intégrée dans les moyens de réglage (4) pour l'alimentation en courant.

7. Tête de lavage, notamment pour des installations de lavage industrielles, avec une unité de freinage selon l'une des revendications 1 à 6.

8. Métier à retordre avec une unité de freinage selon l'une des revendications 1 à 6.
